# EUROPÄISCHE PATENTSCHRIFT

(11) **EP 3 543 089 B1**
(45) Veröffentlichungstag und Bekanntmachung des Hinweises auf die Patenterteilung: **10.03.2021**
(21) Anmeldenummer: 18163716.6
(22) Anmeldetag: 23.03.2018
(51) Int. Cl.: B62D 25/00, B62D 29/00, F16B 19/10, F16B 5/06, F16B 11/00

(54) **VORRICHTUNG ZUR VERSTÄRKUNG, ABDICHTUNG ODER DÄMMUNG EINES STRUKTURELEMENTES**
DEVICE FOR REINFORCING, SEALING OR DAMPING A STRUCTURAL ELEMENT
DISPOSITIF DE RENFORCEMENT, D'ÉTANCHÉITÉ OU D'AMORTISSEMENT D'UN ÉLÉMENT STRUCTURAL

(43) Veröffentlichungstag der Anmeldung: 25.09.2019
(73) Patentinhaber: SIKA TECHNOLOGY AG, 6340 Baar (CH)
(72) Erfinder: Etterli, Heinz, 5627 Besenbüren (CH)
(74) Vertreter: Sika Patent Attorneys

(56) Entgegenhaltungen:
- WO-A1-01/83206
- CN-A- 101 469 729
- DE-A1- 2 736 012
- JP-A- 2002 370 247

## Beschreibung

Die Erfindung betrifft eine Vorrichtung zur Verstärkung, Abdichtung oder Dämmung eines Strukturelementes mit einem Träger und einem Klebstoff. Sie betrifft des Weiteren ein System mit einem Strukturelement und einer darin angeordneten Vorrichtung zur Verstärkung, Abdichtung oder Dämmung des Strukturelementes.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämmen.

Insbesondere im Automobilbau, aber auch im Flugzeug- und Bootsbau, werden deshalb Abdichtungselemente (Englisch: baffle) verwendet, um Hohlräume abzudichten und/ oder akustisch abzuschotten, oder Verstärkungselemente (Englisch: reinforcer) verwendet, um Hohlräume zu verstärken.

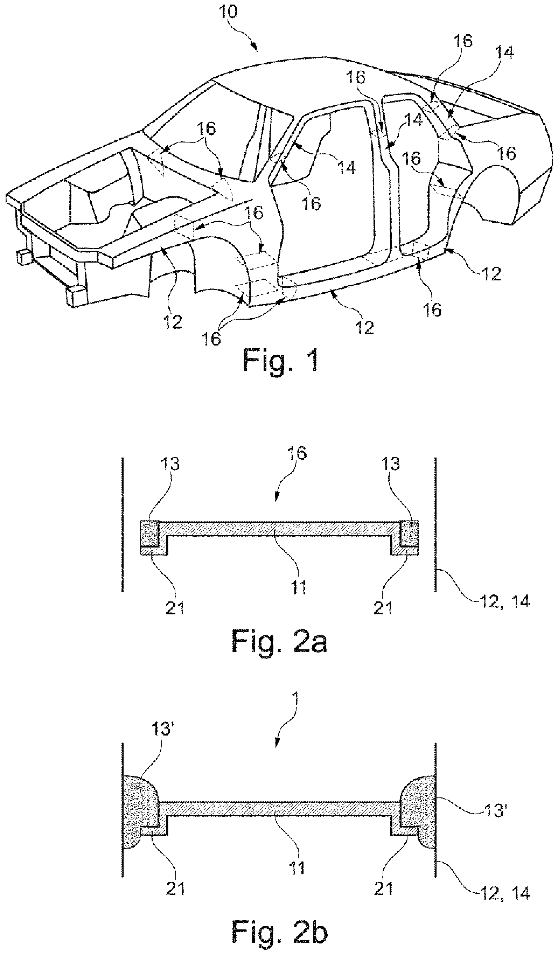

In Fig. 1 ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12 auf. Solche Strukturelemente 12, 14 mit Hohlräumen werden üblicherweise mit Abdichtungs- und/oder Verstärkungselementen 16 abgedichtet bzw. verstärkt.

Fig. 2a und 2b zeigen schematisch ein bekanntes Konzept zum abdichtenden und/oder verstärkenden Verschluss von Öffnungen bzw. Hohlräumen in einem Kraftfahrzeug. Dabei zeigt die Fig. 2a eine Vorrichtung 16 vor einer Expansion eines expandierbaren Materials 13. Fig. 2b zeigt dieselbe Vorrichtung 16 als Bestandteil des Systems 1, jedoch nach einer Expansion des expandierbaren Materials 13, also mit dem expandierten Material 13'.

Die Vorrichtung 16 befindet sich in einem Hohlraum einer Karosseriestruktur, wie sie beispielsweise in Fig. 1 dargestellt ist. Ein Abschnitt eines solchen Strukturelements 12, 14 einer Karosserie ist in den Fig. 2a und 2b schematisch dargestellt. Die Vorrichtung 16 umfasst einen Träger 11, welcher einen Randbereich 21 hat. Das expandierbare Material 13 ist dabei im Wesentlichen auf diesem Randbereich 21 des Trägers 11 angeordnet.

Vor der Expansion des expandierbaren Materials 13 besteht zwischen der Vorrichtung 16 und dem Strukturelement 12, 14 ein Spalt. Dieser Spalt erlaubt es, das Strukturelement 12, 14 zu beschichten, um einen Korrosionsschutz des Strukturelementes 12, 14 zu erreichen. Nach dieser Beschichtung wird das expandierbare Material 13 üblicherweise durch eine Wärmeeinwirkung expandiert, wobei das expandierte Material 13' dadurch den Spalt zwischen der Vorrichtung 16 und dem Strukturelement 12, 14 schliesst. Zudem wird durch die Expansion des expandierbaren Materials 13 auch zugleich eine Fixierung der Vorrichtung 16' im Strukturelement 12, 14 erreicht. Eine derart im Strukturelement 12, 14 befestigte Vorrichtung 16' verstärkt einerseits das Strukturelement 12, 14 und verschliesst andererseits den Hohlraum im Strukturelement 12, 14.

Solche in den Fig. 2a und 2b dargestellten Vorrichtungen 16 werden üblicherweise durch Clips an den Strukturelementen 12, 14 vorfixiert. Diese Vorfixierung dient dazu, die Vorrichtung 16 an der gewünschten Stelle in der Karosserie 10 zu halten, bevor der Träger 11 der Vorrichtung 16 endgültig mit Klebstoff 13 im Strukturelement 12, 14 befestigt ist. Eine solche Vorfixierung durch Clips erlaubt es auch, das Strukturelement 12, 14 mit einer Tauchlackierung zu beschichten, ohne dass dabei die vorfixierte Vorrichtung 16 weggespült wird.

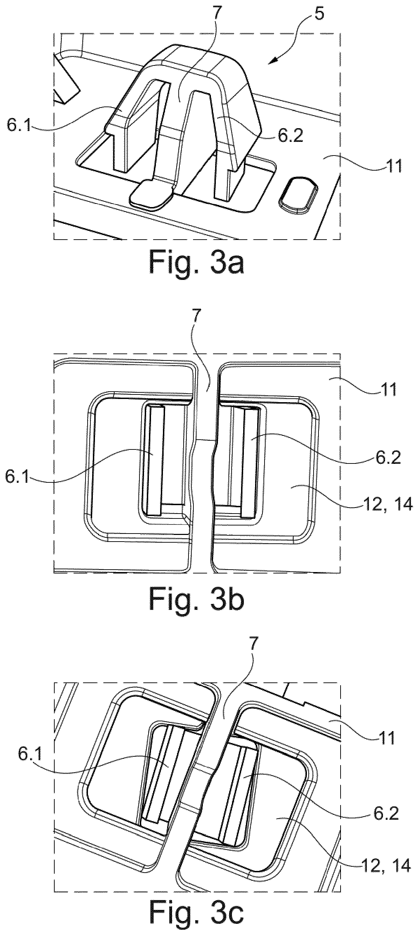

In den Fig. 3a bis 3c ist eine typische Ausführungsform einer solchen Vorfixierung dargestellt. Insbesondere werden zur Vorfixierung der Vorrichtung 16 Clips 5 verwendet, welche in entsprechende Öffnungen in den Strukturelementen 12, 14 eingehakt werden können.

In Fig. 3a ist ein solcher Clip 5 in räumlicher Darstellung schematisch gezeigt. Der Clip 5 hat dabei eine Basis 7, und zwei an dieser Basis 7 angeordnete elastische Flügel 6.1, 6.2. Diese Flügel 6.1, 6.2 haben hakenförmige Elemente, welche dazu vorgesehen sind, an den entsprechenden Kanten der Öffnungen in den Strukturelementen 12, 14 einzurasten.

In Fig. 3b ist ein Ausschnitt einer vorfixierten Vorrichtung 16 an einem Strukturelement 12, 14 dargestellt. Dabei ist die Vorrichtung 16 von unten gezeigt. Somit sind lediglich die Basis 7 des Clips sowie die beiden Enden der elastischen Flügel 6.1, 6.2 ersichtlich. Die Flügel 6.1, 6.2 sind an den entsprechenden Kanten des Strukturelementes 12, 14 eingehakt.

Bei gewissen Vorrichtungen 16 sind solche Clips 5 zur Vorfixierung jedoch problematisch, insbesondere dann, wenn während der Vorfixierung der Vorrichtung 16 im Strukturelement 12, 14 eine grössere Kraft auf den Clip 5 einwirkt. Beispielsweise gibt es Situationen, in welchen die Vorfixierung des Clips 5 am Strukturelement 12, 14 einer Rotationskraft ausgesetzt ist. Sie tritt vor allem dann auf, wenn die Vorrichtung 16 mit lediglich einem Clip am Strukturelement 12, 14 vorfixiert wird, und wenn die Vorrichtung tendenziell gross und schwer ausgebildet ist. Dies kann dazu führen, dass die Vorrichtung 16 nicht an der gewünschten Position gehalten bzw. vorfixiert werden kann und im Extremfall kann es zu einem Lösen der Vorfixierung zwischen Vorrichtung 16 und Strukturelement 12, 14 kommen. In Fig. 3c ist eine solche Situation beispielhaft dargestellt, in welcher der Clip 5 relativ zum Strukturelement 12, 14 verdreht ist
Die JP 2002 370247 A offenbart eine Vorrichtung gemäß dem Oberbegriff des Anspruchs 1.

Der Erfindung liegt daher die Aufgabe zugrunde, eine verbesserte Vorrichtung zur Verstärkung, Abdichtung oder Dämmung eines Strukturelementes zur Verfügung zu stellen, welche die oben genannten Nachteile nicht aufweist. Insbesondere soll die Vorrichtung hinsichtlich der Vorfixierung im Strukturelement verbessert werden, so dass sichergestellt werden kann, dass die Vorrichtung an der gewünschten Position im Strukturelement vorfixiert ist, bis ein Klebstoff den Träger endgültig mit dem Strukturelement verbindet.

Diese Aufgabe wird gelöst durch eine Vorrichtung zur Verstärkung, Abdichtung oder Dämmung eines Strukturelementes in einem Kraftfahrzeug, umfassend: einen Träger mit einem Clip zur Vorfixierung der Vorrichtung im Strukturelement, wobei der Clip eine Basis und zwei an der Basis angeordnete, elastische Flügel umfasst; einen Klebstoff zur Verklebung des Trägers im Strukturelement; und ein Einschubelement, welches in einen Zwischenraum zwischen der Basis und den Flügeln des Clips derart einschiebbar ist, wenn die Vorrichtung durch den Clip am Strukturelement vorfixiert ist, dass die elastischen Flügel in ihrem Bewegungsspielraum eingeschränkt sind.

Diese Lösung hat den Vorteil, dass durch ein einfaches, kostengünstiges Element, nämlich das Einschubelement, eine Vorfixierung auf einfache und kostengünstige Art und Weise wesentlich stabilisiert und verbessert werden kann. Durch das Vorsehen eines solchen Einschubelementes wird es möglich, auf Vorrichtungen, welche lediglich über einen Clip mit dem Strukturelement vorfixiert werden müssen, zuverlässig im Strukturelement zu fixieren. Somit ist es nicht in jedem Fall zwingend, Vorfixierungselemente, wie beispielsweise weitere Clips oder Schweisslaschen oder Ähnliches, an den Vorrichtungen vorzusehen.

Ein Kerngedanke der vorliegenden Erfindung ist es, dass durch eine Einschränkung eines Bewegungsspielraumes der elastischen Flügel des Clips ein Verdrehen, Verschieben bzw. Lösen des Clips am Strukturelement wirksam verhindert werden kann. Dabei ist insbesondere vorteilhaft, dass keine weiteren Anpassungen an bestehenden Systemen vorgenommen werden müssen. Es reicht aus, ein einfaches und kostengünstiges zusätzliches Element, nämlich das Einschubelement, vorzusehen, um die Vorfixierung der Vorrichtung im Strukturelement wesentlich zu verbessern.

In einer beispielhaften Ausführungsform ist das Einschubelement durch einen flexiblen Steg mit dem Träger verbunden.

Dies hat den Vorteil, dass dadurch der Träger und das Einschubelement jeweils beisammen sind. Somit wird eine Logistik bzw. Handhabung des gesamten Systems vereinfacht, und Fehlmanipulationen (beispielsweise eine Verwendung von nicht zusammenpassenden Einschubelementen und Trägern) werden wirksam verhindert.

In einer beispielhaften Weiterbildung ist das Einschubelement durch den flexiblen Steg in einem Bereich des Clips am Träger angeordnet.

Eine solche Anordnung bietet den Vorteil, dass das Einschubelement gerade an der vorgesehenen Stelle, nämlich in der Nähe des Clips, vorliegt. Somit wird eine Handhabung des gesamten Systems vereinfacht.

In einer beispielhaften Ausführungsform sind das Einschubelement und der Träger einstückig ausgebildet.

Dies hat den Vorteil, dass der Träger und das Einschubelement in einem Arbeitsschritt gemeinsam hergestellt werden können, beispielsweise in einem Spritzgussverfahren.

In einer beispielhaften Ausführungsform sind das Einschubelement und der Träger aus demselben Material ausgebildet.

Dies hat wiederum den Vorteil, dass das Einschubelement und der Träger in einem Arbeitsvorgang gemeinsam hergestellt werden können, beispielsweise durch ein Spritzgussverfahren.

In einer beispielhaften Ausführungsform ist der flexible Steg länger als eine Höhe des Einschubelementes.

Dies hat den Vorteil, dass dadurch eine Manipulation des Einschubelementes vereinfacht wird, indem der flexible Steg genügend Spielraum lässt, das Einschubelement entsprechend in den Clip einzuführen.

In einem alternativen Ausführungsbeispiel sind das Einschubelement und der Träger als separate Elemente ausgebildet.

In einer beispielhaften Weiterbildung sind der Träger und das Einschubelement nicht aus demselben Material ausgebildet.

Eine solche separate Anordnung des Einschubelementes und des Trägers hat den Vorteil, dass dadurch zum einen eine einfache Spritzgussform zur Herstellung dieser Teile verwendet werden kann, und dass zum anderen unterschiedliche Materialien eingesetzt werden können, welche hinsichtlich einer Funktion der jeweiligen Elemente optimiert werden können. Beispielsweise kann dabei der Träger und der daran gebildete Clip aus einem elastischeren Material ausgebildet werden, und das Einschubelement kann aus einem weniger elastischen Material hergestellt werden.

Erfindungsgemäß hat der Träger in einem Bereich des Clips eine taschenförmige Vertiefung, wobei das Einschubelement einen Sockel hat, welcher in diese taschenförmige Vertiefung eingreift, wenn das Einschubelement in den Clip eingebracht wird.

Das Vorsehen einer solchen Vertiefung im Träger und eines solchen Sockels am Einschubelement, welche in einem Verwendungszustand ineinandergreifen, hat den Vorteil, dass dadurch ein Bewegungsspielraum der elastischen Flügel des Clips weiter eingeschränkt wird bzw. dass dadurch die Vorfixierung zwischen Vorrichtung und Strukturelement weiter stabilisiert und verbessert werden kann, weil dadurch das Einschubelement besser am Träger verankert werden kann. Somit ist das Einschubelement, und dadurch die gesamte Vorfixierung, besser gegen eine Verdrehung oder eine Verschiebung geschützt.

In einer beispielhaften Weiterbildung ist der Sockel derart ausgebildet, dass er die Vertiefung im Wesentlichen ausfüllt, wenn das Einschubelement in den Clip eingebracht wird.

Dies hat den Vorteil, dass dadurch eine besonders stabile Verankerung des Einschubelementes am Träger erreicht werden kann.

In einer beispielhaften Ausführungsform ist das Einschubelement durch Formschluss mit dem Träger und/oder dem Strukturelement verbindbar.

In einer beispielhaften Weiterbildung hat das Einschubelement einen oder mehrere Haken, welche am Träger und/oder am Strukturelement einrastbar sind.

Eine solche Verbindung zwischen Einschubelement und Träger bzw. Strukturelement durch Formschluss bietet den Vorteil, dass dadurch eine sichere mechanische Verbindung geschaffen wird, welche das Einschubelement gegen ein Herausfallen schützt. Zudem hat dies den Vorteil, dass der Anwender bei einer Manipulation beispielsweise durch ein Klickgeräusch feststellen kann, ob das Einschubelement in der vorgesehenen Position im Clip eingeschoben ist oder nicht.

In einer alternativen Ausführungsform ist das Einschubelement durch Kraftschluss mit dem Träger und/oder dem Strukturelement verbindbar.

In einer beispielhaften Weiterbildung sind dabei das Einschubelement und der Clip so ausgebildet, dass sie keilartig ineinandergreifen, wenn das Einschubelement in dem Clip eingebracht wird.

Eine solche Verbindung zwischen Einschubelement und Träger bzw. Strukturelement mittels Kraftschluss hat den Vorteil, dass die entsprechenden Elemente mit grösseren Toleranzen hergestellt werden können, als dies bei Formschluss der Fall ist. Dadurch können insbesondere kostengünstigere Einschubelemente verwendet werden.

In einer beispielhaften Ausführungsform hat das Einschubelement Verbindungselemente, welche mit dem Strukturelement und/oder mit dem Träger wirkverbunden sind, wenn das Einschubelement im Clip eingebracht ist.

In einer ersten beispielhaften Weiterbildung hat das Einschubelement Verbindungselemente, welche nur mit dem Strukturelement wirkverbunden sind, wenn das Einschubelement im Clip eingebracht ist. Dabei können die Verbindungselemente beispielsweise als Haken oder keilförmige Abschnitte ausgebildet sein.

Eine solche Wirkverbindung zwischen Einschubelement und Strukturelement hat den Vorteil, dass dadurch nicht nur der Träger, sondern auch das Einschubelement direkt am Strukturelement vorfixiert ist. Somit kann ein besserer Schutz gegen Abfallen der Vorrichtung vom Strukturelement erreicht werden.

In einer zweiten alternativen Weiterbildung hat das Einschubelement Verbindungselemente, welche nur mit dem Träger wirkverbunden sind, wenn das Einschubelement im Clip eingebracht ist. Wiederum können die Verbindungselemente beispielsweise als Haken, keilförmige Elementabschnitte oder andersartige Elemente ausgestaltet sein.

Eine solche Wirkverbindung zwischen Einschubelement und Träger hat den Vorteil, dass dadurch das Einschubelement unabhängig von der Ausgestaltung des Strukturelementes ausgebildet werden kann. Das heisst, dass beispielsweise ein einziges Einschubelement für unterschiedlich dicke Strukturelemente verwendet werden kann.

In einer beispielhaften Ausführungsform hat der Träger nur einen Clip zur Vorfixierung der Vorrichtung im Strukturelement.

In einer beispielhaften Ausführungsform ist der Klebstoff auf dem Träger angeordnet. Dabei werden Träger und Klebstoff gemeinsam durch den Clip am Strukturelement vorfixiert.

In einer beispielhaften Weiterbildung ist der Klebstoff durch ein Spritzgussverfahren auf dem Träger angeordnet. Insbesondere kann ein zwei-Komponenten-Spritzgussverfahren verwendet werden, um den Träger und den Klebstoff herzustellen.

In einem alternativen Ausführungsbeispiel wird der Träger ohne Klebstoff am Strukturelement vorfixiert, und der Klebstoff wird separat in das Strukturelement eingeführt.

In einer weiteren alternativen Ausführungsform wird der Klebstoff auf das Strukturelement oder auf den Träger appliziert. Beispielsweise kann dabei der Klebstoff auf den Träger oder das Strukturelement extrudiert werden.

In einer beispielhaften Ausführungsform ist der Klebstoff als nicht expandierbarer Klebstoff ausgebildet.

Als nicht expandierbar wird im Zusammenhang dieser Erfindung ein Klebstoff bezeichnet, welcher sich bei einer Aushärtung um höchstens 5% seines ursprünglichen Volumens vergrössert oder verkleinert.

In einer alternativen Ausführungsform ist der Klebstoff als expandierbarer Klebstoff ausgebildet.

In einer beispielhaften Ausführungsform bildet der expandierbare Klebstoff ein einziges zusammenhängendes Element. In einer alternativen Ausführungsform bilden mehrere nicht zusammenhängende expandierbare Klebstoffe mehrere nicht zusammenhängende Elemente.

In einer beispielhaften Ausführungsform hat der expandierbare Klebstoff eine Expansionsrate von 300 bis 3000%. In einer beispielhaften Weiterbildung hat der expandierbare Klebstoff eine Expansionsrate von 1000 und 2700% bzw. zwischen 1500 und 2500%.

Ein beispielhaftes Material mit einer solchen Expansionsrate ist unter dem Handelsnamen SikaBaffle® 450 erhältlich.

In einer alternativen Ausführungsform hat der expandierbare Klebstoff eine Expansionsrate von 50 bis 500%. In einer beispielhaften Weiterbildung hat der expandierbare Klebstoff eine Expansionsrate von 70 und 400% bzw. zwischen 100 und 300%.

Ein beispielhaftes Material mit einer solchen Expansionsrate ist unter dem Handelsnamen SikaReinforcer® 911 erhältlich.

Der Träger kann aus verschiedenen Materialien bestehen. Bevorzugte Materialien sind Kunststoffe, insbesondere Polyurethane, Polyamide, Polyester und Polyolefine, bevorzugt hochtemperaturbeständige Polymere wie Poly(phenylenether), Polysulfone oder Polyethersulfone. Besonders bevorzugt wird Polyamid, insbesondere Polyamid 6, Polyamid 6,6, Polyamid 11, Polyamid 12 oder ein Gemisch davon verwendet. Auch Kombinationen mit Fasern, wie beispielsweise Glasfasern oder Karbonfasern, sind möglich.

Weiterhin kann der Träger einen beliebigen Aufbau und eine beliebige Struktur aufweisen. Er kann beispielsweise massiv, hohl, oder geschäumt sein oder eine gitterartige Struktur aufweisen. Die Oberfläche des Trägers kann typischerweise glatt, rau oder strukturiert sein.

In einer beispielhaften Ausführungsform ist der Träger durch ein Spritzgussverfahren hergestellt.

In einer beispielhaften Ausführungsform umfasst der Träger einen Kunststoff, insbesondere Polyamid.

Die eingangs gestellte Ausgabe wird weiterhin gelöst durch ein System eines verstärkten, abgedichteten oder gedämmten Strukturelementes in einem Kraftfahrzeug, das System umfassend: ein Strukturelement; und eine Vorrichtung gemäss obiger Beschreibung, wobei die Vorrichtung durch den Clip am Strukturelement befestigt ist, und wobei das Einschubelement zumindest teilweise im Zwischenraum zwischen der Basis und den Flügeln des Clips angeordnet ist, so dass die elastischen Flügel in ihrem Bewegungsspielraum eingeschränkt sind.

In einer beispielhaften Ausführungsform ist dabei der Klebstoff als expandierbares Material ausgebildet.

Einzelheiten und Vorteile der Erfindung werden im Folgenden anhand von Ausführungsbeispielen und mit Bezug auf schematische Zeichnungen beschrieben. Es zeigen:
- Fig. 1: eine beispielhafte Darstellung einer Karosserie gemäss Stand der Technik;
- Fig. 2a und 2b: schematische Darstellung einer beispielhaften Vorrichtung gemäss Stand der Technik;
- Fig. 3b bis 3b: schematische Darstellung einer beispielhaften Vorfixierung einer Vorrichtung in einem Strukturelement gemäss Stand der Technik;
- Fig. 4a bis 4e: schematische Darstellung einer beispielhaften Vorfixierung einer Vorrichtung in einem Strukturelement;
- Fig. 5a bis 5d: schematische Darstellung einer erfindungsgemäßen Vorfixierung einer Vorrichtung in einem Strukturelement;
- Fig. 6a und 6b: schematische Darstellung einer erfindungsgemäßen Vorfixierung einer Vorrichtung in einem Strukturelement; und
- Fig. 7: schematische räumliche Darstellung eines beispielhaften Trägers mit einem Einschubelement.

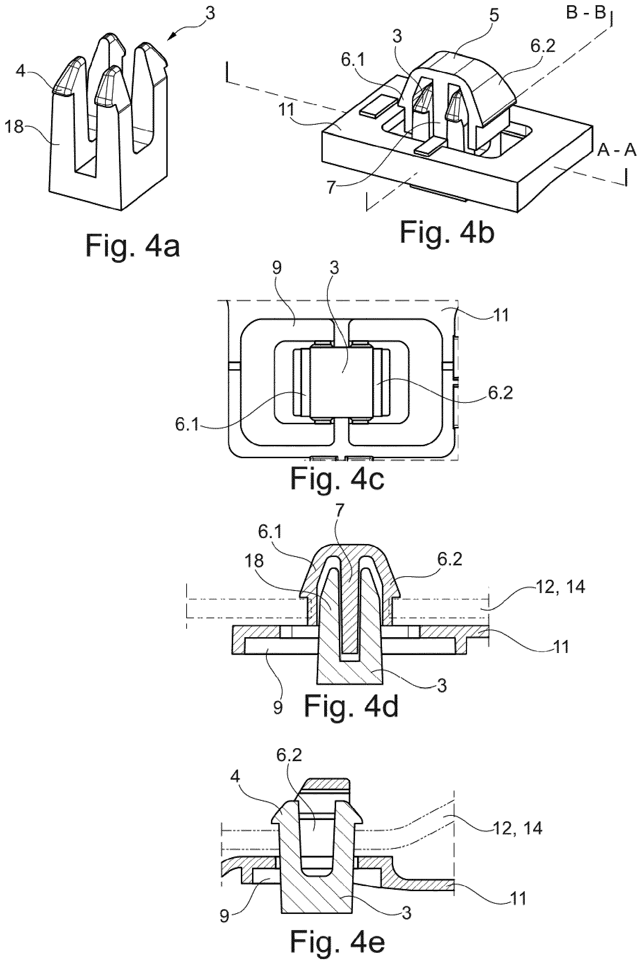

In den Fig. 4a bis 4e ist eine erste Variante einer beispielhaften Vorfixierung einer Vorrichtung in einem Strukturelement dargestellt. Dabei zeigt die Fig. 4a ein beispielhaftes Einschubelement 3 in räumlicher Darstellung. Die Fig. 4b zeigt das beispielhafte Einschubelement 3, wie es im Clip 5 des Trägers 11 angeordnet wird, ebenfalls in räumlicher Darstellung. Die Fig. 4c zeigt eine Ansicht von unten der Vorfixierung gemäss Fig. 4b. Fig. 4d zeigt einen Querschnitt der schematischen Vorfixierung entlang der Schnittebene A-A in Fig. 4b, und die Fig. 4e zeigt einen Querschnitt entlang einer Schnittebene B-B in der Vorfixierung gemäss Fig. 4b.

Das Einschubelement 3 gemäss Fig. 4a hat vier armartige Fortsätze, welche jeweils an einem Ende einen Haken 4 ausbilden. Die armartigen Fortsätze sind als keilförmige Elemente 18 ausgebildet. Dabei sind die vier Fortsätze über eine gemeinsame Basis miteinander verbunden.

In Fig. 4b ist das Einschubelement 3 aus Fig. 4a in einem Clip 5 eingeschoben. Dabei ist ersichtlich, dass die Arme des Einschubelementes 3 den Zwischenbereich zwischen Basis 7 und den elastischen Flügeln 6.1, 6.2 des Clips 5 derart ausfüllen, dass ein Bewegungsspielraum dieser elastischen Flügel 6.1, 6.2 eingeschränkt ist. In diesem Ausführungsbeispiel sind die Haken 4 des Einschubelementes 3 dazu vorgesehen, in einem Verwendungszustand einen Formschluss mit dem Strukturelement 12, 14 einzugehen. Dies wird aus dem Querschnitt gemäss Fig. 4e entlang der Schnittlinie B-B ersichtlich.

In Fig. 4c ist die räumliche Darstellung gemäss Fig. 4b in einer Sicht von unten dargestellt.

In Fig. 4d ist ein Querschnitt entlang der Linie A-A aus der Fig. 4b dargestellt. Dabei ist ersichtlich, wie die armartigen Fortsätze des Einschubelementes 3 mit ihren keilförmigen Elementen 18 einen Bewegungsspielraum der elastischen Flügel 6.1, 6.2 des Clips 5 einschränken, indem die Fortsätze des Einschubelementes 3 Zwischenbereiche zwischen der Basis 7 und den elastischen Flügeln 6.1, 6.2 des Clips 5 ausfüllen.

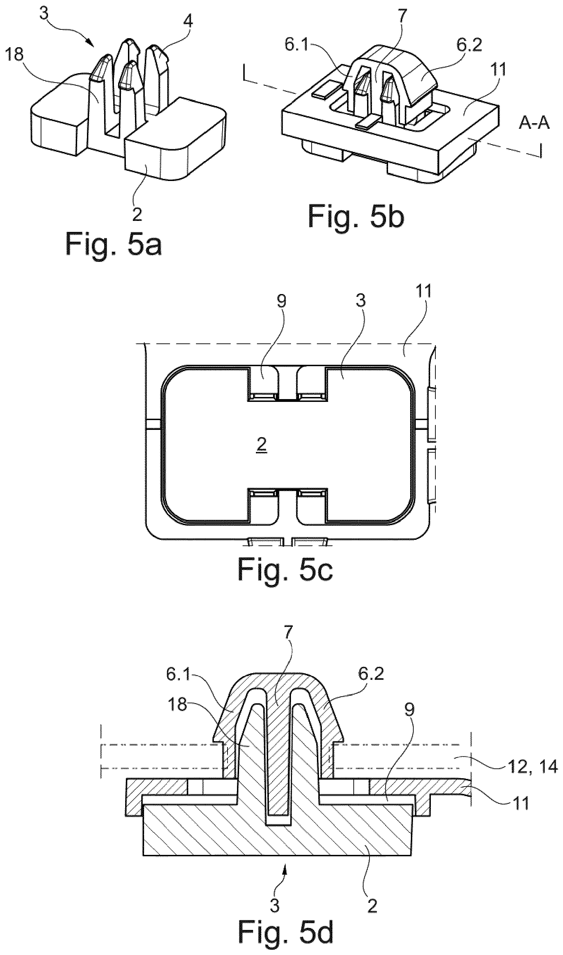

In den Fig. 5a bis 5d ist eine zweite Variante einer Vorfixierung der Vorrichtung an einem Strukturelement schematisch dargestellt. Dabei zeigt die Fig. 5a eine zweite Variante eines Einschubelementes 3, die Fig. 5b zeigt ein solches Einschubelement 3 eingesetzt in einem Clip 5, die Fig. 5c zeigt eine Ansicht von unten der Vorfixierung gemäss Fig. 5b, und die Fig. 5d zeigt einen Querschnitt der Vorfixierung gemäss Fig. 5b entlang der Schnittebene A-A.

Das Einschubelement 3 in diesem Ausführungsbeispiel hat wiederum vier armartige Fortsätze, welche jeweils an einem Ende einen Haken 4 bilden, und welche wiederum einen keilförmigen Abschnitt 18 ausbilden. Im Unterschied zur Ausführungsform gemäss Fig. 4a hat das Einschubelement 3 in diesem Ausführungsbeispiel einen Sockel 2. Dieser Sockel 2 ist dabei derart dimensioniert, dass er in eine entsprechende taschenartige Vertiefung 9 des Trägers 11 eingreift, wenn das Einschubelement 3 im Clip 5 eingeschoben wird.

Dieses Ineinandergreifen von Sockel 2 und taschenförmiger Vertiefung 9 des Trägers 11 ist insbesondere aus der Querschnittsdarstellung gemäss Fig. 5d gut ersichtlich. Durch dieses Ineinandergreifen wird das Einschubelement 3 besser am Träger 11 verankert, wodurch eine Gesamtstabilität der Vorfixierung verbessert werden kann.

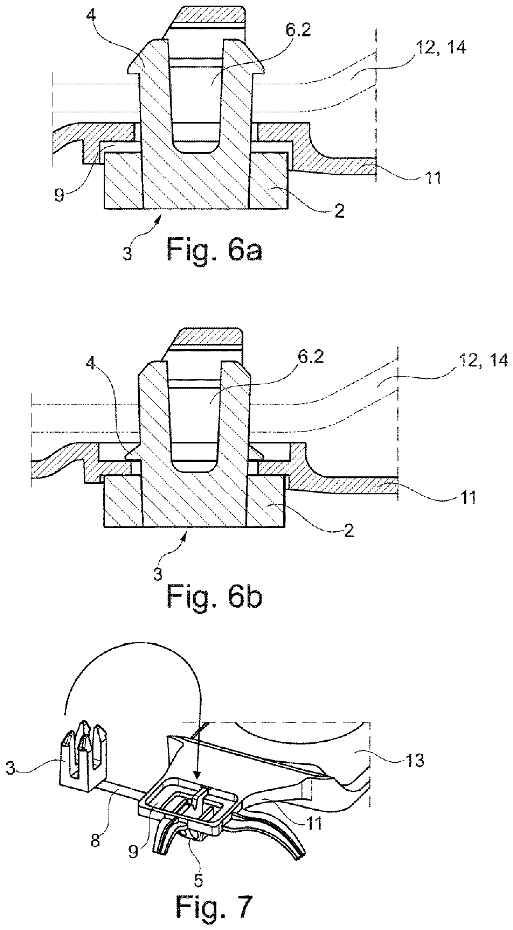

In den Fig. 6a und 6b sind zwei unterschiedliche Varianten der Verankerung des Einschubelementes 3 dargestellt.

In Fig. 6a ist das Einschubelement 3 direkt am Strukturelement 12, 14 verankert. Dabei rasten die Haken 4 an den entsprechenden Kanten des Strukturelementes 12, 14 ein, wenn das Einschubelement 3 vollständig in den Clip 5 eingeschoben wird.

In Fig. 6b hingegen ist das Einschubelement 3 am Träger 11 verankert. Dabei sind die Haken 4 am Einschubelement 3 tiefer an den armartigen Fortsätzen angeordnet, so dass diese an dafür vorgesehenen Kanten des Trägers 11 einrasten, wenn das Einschubelement 3 vollständig in den Clip 5 eingeschoben wird.

In Fig. 7 ist ein Abschnitt einer beispielhaften Vorrichtung dargestellt, wobei das Einschubelement 3 über einen Steg 8 mit dem Träger 11 verbunden ist. Dabei ist der elastische Steg 8 in einem Bereich des Clips 5 am Träger 11 angeordnet. In diesem Ausführungsbeispiel ist auf dem Träger 11 ein Klebstoff 13 angeordnet. Nachdem der Clip 5 im Strukturelement (nicht dargestellt in dieser Figur) eingerastet ist, wird das Einschubelement 3 über den flexiblen Steg 8 umgelegt und zwischen den Flügeln und der Basis des Clips 5 eingeschoben.

### Bezugszeichenliste

- 1: System
- 2: Sockel
- 3: Einschubelement
- 4: Haken
- 5: Clip
- 6.1: erster Flügel
- 6.2: zweiter Flügel
- 7: Basis
- 8: Steg
- 9: Vertiefung
- 10: Karosserie
- 11: Träger
- 12: Strukturelement
- 13: expandierbares Material
- 13': expandiertes Material
- 14: Strukturelement
- 16: Vorrichtung
- 18: keilförmiges Element
- 21: Randbereich

## Patentansprüche

1. Vorrichtung zur Verstärkung, Abdichtung oder Dämmung eines Strukturelementes (12, 14) in einem Kraftfahrzeug, umfassend:
einen Träger (11) mit einem Clip (5) zur Vorfixierung der Vorrichtung (16) im Strukturelement (12, 14), wobei der Clip (5) eine Basis (7) und zwei an der Basis (7) angeordnete, elastische Flügel (6.1, 6.2) umfasst;
einen Klebstoff zur Verklebung des Trägers (11) im Strukturelement (12, 14);
wobei die Vorrichtung (16) weiterhin ein Einschubelement (3) umfasst, welches in einem Zwischenraum zwischen der Basis (7) und den Flügeln (6.1, 6.2) des Clips (5) derart einschiebbar ist, wenn die Vorrichtung (16) durch den Clip (5) am Strukturelement (12, 14) vorfixiert ist, dass die elastischen Flügel (6.1, 6.2) in ihrem Bewegungsspielraum eingeschränkt sind;
**dadurch gekennzeichnet, dass** der Träger (11) in einem Bereich des Clips (5) eine taschenförmige Vertiefung (9) hat, und wobei das Einschubelement (3) einen Sockel (2) hat, welcher in die taschenförmige Vertiefung (9) eingreift, wenn das Einschubelement (3) in den Clip (5) eingebracht wird.

2. Vorrichtung nach Anspruch 1, wobei das Einschubelement (3) durch einen flexiblen Steg (8) mit dem Träger (11) verbunden ist.

3. Vorrichtung nach Anspruch 2, wobei das Einschubelement (3) und der Träger (11) einstückig und/oder aus demselben Material ausgebildet sind.

4. Vorrichtung nach Anspruch 2 oder 3, wobei der flexible Steg (8) länger ist als eine Höhe des Einschubelementes (3).

5. Vorrichtung nach Anspruch 1, wobei der Träger (11) und das Einschubelement (3) als separate Elemente ausgebildet sind, und/oder wobei der Träger (11) und das Einschubelement (3) nicht aus demselben Material ausgebildet sind.

6. Vorrichtung nach einem der vorhergehenden Ansprüche, wobei der Sockel (2) derart ausgebildet ist, dass er die Vertiefung (9) im Wesentlichen ausfüllt, wenn das Einschubelement (3) in den Clip (5) eingebracht wird.

7. Vorrichtung nach einem der vorhergehenden Ansprüche, wobei das Einschubelement (3) durch Formschluss mit dem Träger (11) und/oder dem Strukturelement (12, 14) verbindbar ist.

8. Vorrichtung nach Anspruch 7, wobei das Einschubelement (3) einen oder mehrere Haken (4) hat, welche am Träger (11) und/oder am Strukturelement (12, 14) einrastbar sind.

9. Vorrichtung nach einem der vorhergehenden Ansprüche, wobei das Einschubelement (3) durch Kraftschluss mit dem Träger (11) und/oder dem Strukturelement (12, 14) verbindbar ist.

10. Vorrichtung nach Anspruch 9, wobei das Einschubelement (3) und der Clip (5) so ausgebildet sind, dass sie keilartig ineinandergreifen, wenn das Einschubelement (3) in den Clip (5) eingebracht wird.

11. Vorrichtung nach einem der vorhergehenden Ansprüche, wobei das Einschubelement (3) Verbindungselemente (4, 18) hat, welche mit dem Strukturelement (12, 14) und/oder mit dem Träger (11) wirkverbunden sind, wenn das Einschubelement (3) im Clip (5) eingebracht ist.

12. Vorrichtung nach einem der vorhergehenden Ansprüche, wobei der Träger (11) nur einen Clip (5) zur Vorfixierung der Vorrichtung (16) im Strukturelement (12, 14) hat.

13. System (1) eines verstärkten, abgedichteten oder gedämmten Strukturelementes in einem Kraftfahrzeug, das System (1) umfassend:
ein Strukturelement (12, 14); und
eine Vorrichtung (16) nach einem der Ansprüche 1 bis 12, wobei die Vorrichtung (16) durch den Clip (5) am Strukturelement (12, 14) befestigt ist, und wobei das Einschubelement (3) zumindest teilweise im Zwischenraum zwischen der Basis (7) und den Flügeln (6.1, 6.2) des Clips (5) angeordnet ist, so dass die elastischen Flügel (6.1, 6.2) in ihrem Bewegungsspielraum eingeschränkt sind.

14. System nach Anspruch 13, wobei der Klebstoff als expandierbares Material (13) ausgebildet ist.

## Claims

1. Device for reinforcing, sealing or insulating a structural element (12, 14) in a motor vehicle, comprising:
a support (11) having a clip (5) for pre-fixing the device (16) in the structural element (12, 14), wherein the clip (5) comprises a base (7) and two flexible wings (6.1, 6.2) arranged on the base (7);
an adhesive for adhesively bonding the support (11) in the structural element (12, 14);
wherein the device (16) furthermore comprises an insertion element (3), which can be inserted in such a way into an interspace between the base (7) and the wings (6.1, 6.2) of the clip (5) when the device (16) is pre-fixed on the structural element (12, 14) by the clip (5) that the flexible wings (6.1, 6.2) are restricted in their freedom of movement;
**characterized in that** the support (11) has a pocket-shaped depression (9) in a region of the clip (5), and wherein the insertion element (3) has a foot (2), which engages in the pocket-shaped depression (9) when the insertion element (3) is introduced into the clip (5) .

2. Device according to Claim 1, wherein the insertion element (3) is connected to the support (11) by a flexible web (8).

3. Device according to Claim 2, wherein the insertion element (3) and the support (11) are formed integrally and/or from the same material.

4. Device according to Claim 2 or 3, wherein the flexible web (8) is longer than a height of the insertion element (3).

5. Device according to Claim 1, wherein the support (11) and the insertion element (3) are designed as separate elements, and/or wherein the support (11) and the insertion element (3) are not formed from the same material.

6. Device according to any of the preceding claims, wherein the foot (2) is designed in such a way that it substantially fills the depression (9) when the insertion element (3) is introduced into the clip (5).

7. Device according to any of the preceding claims, wherein the insertion element (3) can be connected by positive engagement to the support (11) and/or to the structural element (12, 14).

8. Device according to Claim 7, wherein the insertion element (3) has one or more hooks (4), which can be latched in on the support (11) and/or on the structural element (12, 14).

9. Device according to any of the preceding claims, wherein the insertion element (3) can be connected by non-positive engagement to the support (11) and/or to the structural element (12, 14).

10. Device according to Claim 9, wherein the insertion element (3) and the clip (5) are designed in such a way that they engage in one another in a wedge-like manner when the insertion element (3) is introduced into the clip (5) .

11. Device according to any of the preceding claims, wherein the insertion element (3) has connecting elements (4, 18), which are operatively connected to the structural element (12, 14) and/or to the support (11) when the insertion element (3) is introduced into the clip (5) .

12. Device according to any of the preceding claims, wherein the support (11) has just one clip (5) for pre-fixing the device (16) in the structural element (12, 14) .

13. System (1) of a reinforced, sealed or insulated structural element in a motor vehicle, the system (1) comprising:
a structural element (12, 14); and
a device (16) according to any of Claims 1 to 12, wherein the device (16) is fastened on the structural element (12, 14) by the clip (5), and wherein the insertion element (3) is arranged at least partially in the interspace between the base (7) and the wings (6.1, 6.2) of the clip (5), with the result that the flexible wings (6.1, 6.2) are restricted in their freedom of movement.

14. System according to Claim 13, wherein the adhesive is designed as an expandable material (13).

## Revendications

1. Dispositif de renforcement, d'étanchéité ou d'isolation d'un élément structurel (12, 14) dans un véhicule automobile, comprenant :
un support (11) doté d'une attache (5) pour une fixation provisoire du dispositif (16) dans l'élément structurel (12, 14), l'attache (5) comprenant une base (7) et deux ailes élastiques (6.1, 6.2) disposées sur la base (7) ;
un adhésif pour coller le support (11) dans l'élément structurel (12, 14) ;
le dispositif (16) comprenant en outre un élément d'insertion (3) qui peut être inséré dans un espace entre la base (7) et les ailes (6.1, 6.2) de l'attache (5) de telle sorte que les ailes élastiques (6.1, 6.2) sont limitées au niveau de leur dégagement si le dispositif (16) est fixé provisoirement par l'attache (5) sur l'élément structurel (12, 14) ;
**caractérisé en ce que** le support (11) présente un creux en forme de poche (9) dans une zone de l'attache (5), et dans lequel l'élément d'insertion (3) présente un socle (2) qui vient en prise dans le creux en forme de poche (9) lorsque l'élément d'insertion (3) est introduit dans l'attache (5).

2. Dispositif selon la revendication 1, dans lequel l'élément d'insertion (3) est relié au support (11) par une entretoise flexible (8).

3. Dispositif selon la revendication 2, dans lequel l'élément d'insertion (3) et le support (11) sont réalisés d'un seul tenant et/ou à partir du même matériau.

4. Dispositif selon la revendication 2 ou 3, dans lequel l'entretoise flexible (8) est plus longue qu'une hauteur de l'élément d'insertion (3).

5. Dispositif selon la revendication 1, dans lequel le support (11) et l'élément d'insertion (3) sont réalisés sous forme d'éléments séparés, et/ou le support (11) et l'élément d'insertion (3) ne sont pas réalisés à partir du même matériau.

6. Dispositif selon l'une quelconque des revendications précédentes, dans lequel le socle (2) est réalisé de telle sorte qu'il comble substantiellement le creux (9) lorsque l'élément d'insertion (3) est introduit dans l'attache (5).

7. Dispositif selon l'une quelconque des revendications précédentes, dans lequel l'élément d'insertion (3) peut être relié par complémentarité de forme au support (11) et/ou à l'élément structurel (12, 14) .

8. Dispositif selon la revendication 7, dans lequel l'élément d'insertion (3) présente un ou plusieurs crochets (4) qui peuvent s'enclencher sur le support (11) et/ou sur l'élément structurel (12, 14).

9. Dispositif selon l'une quelconque des revendications précédentes, dans lequel l'élément d'insertion (3) peut être relié par adhérence au support (11) et/ou à l'élément structurel (12, 14).

10. Dispositif selon la revendication 9, dans lequel l'élément d'insertion (3) et l'attache (5) sont réalisés de telle sorte qu'ils s'imbriquent comme des coins lorsque l'élément d'insertion (3) est introduit dans l'attache (5).

11. Dispositif selon l'une quelconque des revendications précédentes, dans lequel l'élément d'insertion (3) présente des éléments de connexion (4, 18) qui sont en relation active avec l'élément structurel (12, 14) et/ou avec le support (11) lorsque l'élément d'insertion (3) est introduit dans l'attache (5).

12. Dispositif selon l'une quelconque des revendications précédentes, dans lequel le support (11) ne présente qu'une seule attache (5) pour la fixation provisoire du dispositif (16) dans l'élément structurel (12, 14) .

13. Système (1) d'un élément structurel renforcé, rendu étanche ou isolé dans un véhicule automobile, le système (1) comprenant :
un élément structurel (12, 14) ; et
un dispositif (16) selon l'une quelconque des revendications 1 à 12, le dispositif (16) étant fixé à l'élément structurel (12, 14) par l'intermédiaire de l'attache (5), et l'élément d'insertion (3) étant disposé au moins en partie dans l'espace entre la base (7) et les ailes (6.1, 6.2) de l'attache (5) de sorte que les ailes élastiques (6.1, 6.2) sont limitées au niveau de leur dégagement.

14. Système selon la revendication 13, dans lequel l'adhésif est réalisé sous la forme d'un matériau expansible (13).
